# EUROPEAN PATENT APPLICATION

(11) **EP 2 854 471 A1**
(43) Date of publication of application: **01.04.2015**
(21) Application number: 13360031.2
(22) Date of filing: 27.09.2013
(51) Int. Cl.: H04W 76/04, H04W 4/10, H04L 29/06

(54) **Floor management method, system, node for dormant PTT UE**

(71) Applicant: ALCATEL LUCENT, 92100 Boulogne-Billancourt (FR)
(72) Inventor: Lim, Seau S., Swindon, Wiltshire SN5 7DJ (GB); Palat, Sudeep K., Swindon, Wiltshire SN5 7DJ (GB)
(74) Representative: Greenwood, Matthew David

(57) **Abstract**

A method for managing the floor in a device-to-device proximity service comprising receiving a floor request message (115) at a centralised node (117) of the system sent by originating user equipment (101) transmitting a floor response message (121) to the originating (101) from the centralised node in response to the floor request message (115), transmitting a wake message (125) from the centralised node to at least one listening UE (113), and using the centralised node (117) to allocate resources (127) for a proximity session between the originating UE (101) and the or each listening UE (113).

## Description

### TECHNICAL FIELD

The present invention relates generally to a system, method, node and user equipment for managing the floor in a device-to-device proximity service, and more particularly although not exclusively to a system, method, node and user equipment for managing the floor in a Push-To-Talk (PTT) over Cellular (PoC) system.

### BACKGROUND

Development of mobile communication technologies have led to various services and applications which use cellular devices, such as Push-To-Talk (PTT) services for example in which a device acts, essentially, as a walkie-talkie, albeit with the potential for enhanced service provision. Push-to-talk over cellular (PoC) enables two-way radio service over a traditional cellular network and provides one-to-one and one-to-many voice communication services to cellular handsets equipped with a PTT option.

In a PoC service, floor control is a mediated function that determines who the current speaker is, that is, who has the floor. Floor management is therefore required in order to enable an originator to hold the floor for transmitting data and only release the floor at the end of the data transmission. During this time, other users can typically only listen to the transmissions. Once the floor is released, the other users can then request the floor.

### SUMMARY

According to an example, there is provided a method for managing the floor in a device-to-device proximity service comprising receiving a floor request message at a centralised node of the system sent by originating user equipment (UE), transmitting a floor response message to the originating UE from the centralised node in response to the floor request message, transmitting a wake message from the centralised node to at least one listening UE, and using the centralised node to allocate resources for a proximity session between the originating UE and the or each listening UE. The service can be a Push-To-Talk (PTT) over Cellular (PoC) service. The floor request message can be received at an application layer or non-access stratum portion of the centralised node, and the method can further comprise forwarding the floor request message from the application layer or non-access stratum portion to a radio access portion of the centralised node. The wake message can be transmitted from the radio access portion of the centralised node. Different resources for a PoC session can be allocated on the basis of the capabilities of the or each listening device. The resources can be allocated dynamically, or on a semi-persistent basis such that the resources are followed until release. The floor response and wake messages can be provided in a single message. That is, as a single or combined message for example. The floor request message can be received at a radio side or access stratum portion of the centralised node. A floor release message can be received at the centralised node and the allocated resources can be released to the centralised node. The floor release message can be provided to the radio access portion of the node.

According to an example, there is provided a node for managing the floor of a device-to-device push-to-talk service in a radio communications system, operable to receive a floor request message from an originating user equipment (UE), transmit a floor response message to the originating UE in response to the floor request message, transmit a wake message to at least one listening UE, and allocate resources for the service between the originating UE and the or each listening UE. The node can further be operable to receive the floor request message from an originating user equipment (UE) at an application layer of the node, and transmit the floor request message from the application layer to radio access portion of the node. The node can further be operable to receive the floor request message from an originating user equipment (UE) at a radio access portion of the node.

According to an example, there is provided user equipment (UE) operable to manage the floor of a device-to-device push-to-talk service in a radio communications system, the UE operable to receive a floor request message from an originating UE, transmit a floor response message to the originating UE in response to the floor request message, transmit a wake message to at least one listening UE of the system, and allocate resources for the service between the originating UE and the or each listening UE. The user equipment can be operable to manage the floor of the service when not under the coverage of the system.

### BRIEF DESCRIPTION OF THE DRAWINGS

Embodiments will now be described, by way of example only, with reference to the accompanying drawings, in which:
Figure 1 is a schematic representation of a floor management system and associated message flow according to an example; and
Figure 2 is a schematic representation of an alternative floor management system and associated message flow according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Wireless Push-To-Talk (PTT) networks are designed to facilitate communication among two or more users, and employ half-duplex communication. For example, a Push-to-Talk over Cellular (PoC) service establishes a half-duplex audio communication channel between a group of PoC users or clients. At most, one member of a PoC group has the right to transmit at any time and all other members receive the transmitted information. A floor control mechanism is used to arbitrate requests for the right to transmit from different members of the group. Typically, the talk burst generated by the sender is packetized and then streamed to the receivers.

In PoC systems, a server is typically a centralized control point that grants a "floor" to a PTT user who desires to speak to a respective talk group. Only one user may speak at one time. The user wishing to speak, pushes the talk button on a user equipment, gains the floor and speaks, while the other users may only listen during the interval. There are possible use cases where a user may wish to transmit information, other than speech, for example a video file, to the talk group or to another user.

In an example, a system, node, user equipment and method is provided to enable centralised floor management in a radio telecommunication system using a centralised node that is operable to perform floor management for a device-to-device proximity service such as a PoC service for example. Under network coverage, the centralised node can be a macro node of the system. Out of coverage, a user equipment device can act as the centralised node. In an example, the centralised node acts as the arbitrator and decision maker, able to transmit and receive data representing messages in order to receive floor requests and discover devices that are proximate to an originating user equipment device and which may be associated with a group that is using a device-to-device (D2D) proximity service such as PoC.

In an example, multiple aspects regarding D2D group communication include resource allocation for the transmitting or originating device, a wake up mechanism including information about resource allocation for the (or each in the case that are multiple such devices) receiving device, and floor management for a common group communication application, PTT.

According to an example, two approaches to floor management are provided:
1. Application layer/non-access stratum in which a user (typically termed a "dispatcher") can manually manage the floor among any users in proximity to the originating device; and
2. MAC/RRC/access stratum in which the centralised node is operable to manage the floor among the users in proximity to an originating device in an autonomous (that is, without user intervention) way.

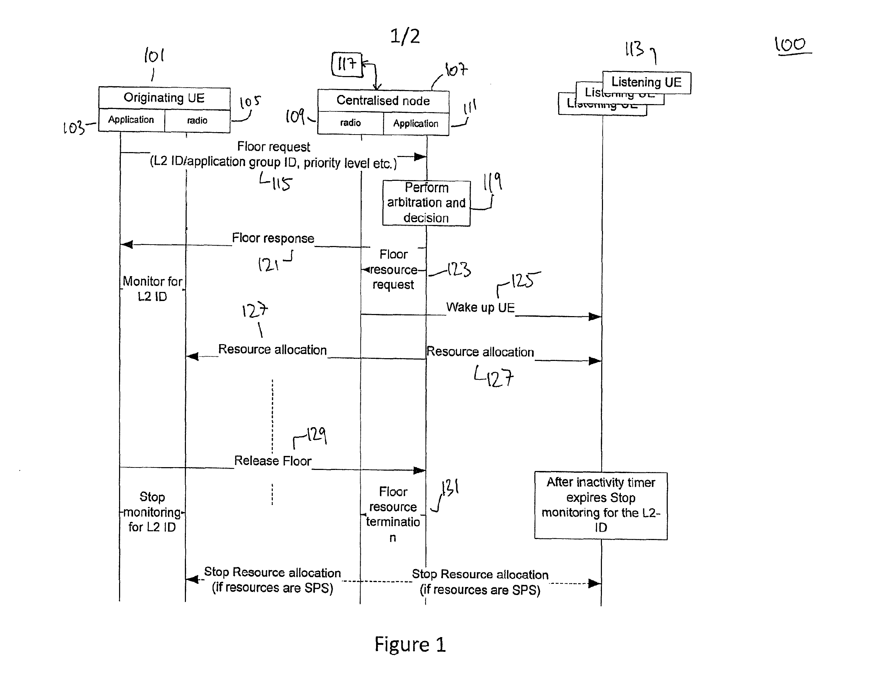

Figure 1 is a schematic representation of a floor management system and associated message flow according to an example. An originating UE 101 includes an application layer 103 (non-access stratum, NAS) and a radio access portion 105 (access stratum, AS) as is typical. A centralised node 107 of the system 100 includes an application layer 111 (non-access stratum) and a radio access portion 109 (access stratum). Multiple further UEs 113 are provided.

To request the floor in a device-to-device proximity service such as PTT for example, originating UE 101 transmits an application layer floor request message 115 to a push-to-talk controller (dispatcher) 117 at the centralised node 107. Upon receiving the request, the PTT floor controller 117 checks (block 119) whether any other user in close proximity (via a discovery phase for example) is holding the floor or has higher priority than the requesting user. If yes, the controller rejects the request. Otherwise, it accepts the request and a floor response message 121 is transmitted to the originating UE 101. The node 107 transmits the floor resource request 123 to the radio side 109 of node 107. The application layer/NAS 111 also informs the radio side (AS) 109 of the centralised node 107 to wakeup 125 the UEs 113 in close proximity to the originating UE 101 and which are associated with the group call, followed by allocating resources 127 for the PTT over the D2D communication path for the originating UE 101.

In an example, the floor request 115, floor response 121 and floor release messages 129 can be sent/received by a protocol layer (MAC, RRC or L1) in the access stratum.

The resources can be dynamically scheduled or be semi-persistently scheduled for the PTT talk spurt. In an example, the basic information from the Application layer/NAS layer from the UE includes the user identity of the UE requesting the floor and the group id or L2 id (G-RNTI) for the requested group communication. This information is passed to the AS 109 in the centralized node 107. The application/NAS 111 can also provide confirmation of the floor grant to the requesting device using Application/NAS messaging.

The L2 identity for the group/application group identity is used by the AS 109 for waking up the receiving UEs 113 of the group to monitor the control channel (Physical Downlink Control Channel, PDCCH and so on for example). The L2 identity/application-group identity can also be used for scheduling (this is configured to all the UEs in close proximity and belonging to the same group during such as during an authorisation phase for example). In an example, this is performed by transmitting a resource allocation using PDCCH or ePDCCH with the L2 id of the group. The resource allocation could be a common one for UEs able to transmit and receive, or the central node 107 can provide separate resource allocations for transmit or receive only UEs.

The originating UE 101 can transmit using the resource allocated by the centralised node 107, while other UEs 113 monitor the control channel to see whether there is data to be received from the originating UE 101. The resource allocation can be dynamic (packet by packet) or semi-persistent (such that, for example, once allocated the resource allocation is followed until the resources are released).

Once the originating UE 101 has completed its transmission, it releases the floor by sending a release message 129 to the controller 117. The controller 117 then informs 131 the radio side 109 of the centralised node 107 to release the resources. In an example, the listening UEs 113 stop monitoring the control channel either after a certain idle period or in the SPS case, the centralised node stops the SPS schedule.

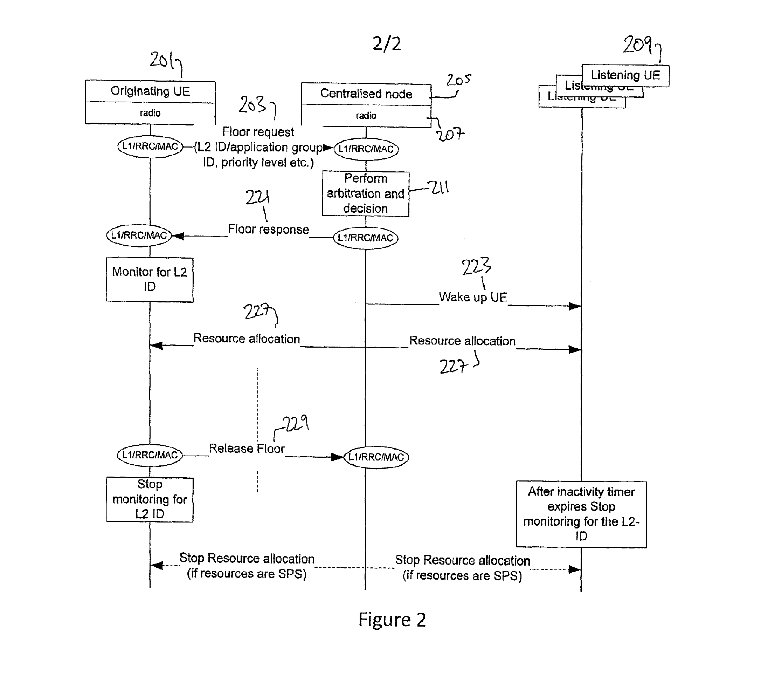

In the case that the MAC/RRC/access stratum of the centralised node is operable to manage the floor among, the only difference is that the PTT floor controller is performed at the access stratum (either in L1, MAC or RRC). Figure 2 is a schematic representation of a floor management system and associated message flow according to an example.

To request the floor in a device-to-device proximity service, an originating UE 201 sends a radio resource control (RRC) floor request message 203, MAC CE or L1 information to a centralised node 205. The radio side 207 of the centralised node 205 decides whether to reject or accept the floor request 203 in block 211. The floor request 203 either contains the L2 identity of a UE or group 209, or it can be inferred from the floor request. This can be used for scheduling and for waking up UEs associated with the group as described above. If the centralised node wants to reject a request, it can send either a RRC response/reject message or MAC CE or L1 information on the PDCCH back to the originating UE 201. Otherwise, node 205 accepts the request 203 and a floor response message 221 is transmitted via a RRC message or a MAC CE or L1 information on PDCCH to the originating UE 201.

The centralised node 205 transmits a message 223 to wakeup the UEs 209 in close proximity to the originating UE 201 and which are associated with the group call, followed by allocating resources 227 for the PTT for the originating UE 201. The response message and the wake up message can be the same (or sent in one message rather than separately) in an example.

As before, the resources can be dynamically scheduled or be semi-persistently scheduled for the PTT talk spurt. The originating UE 201 can transmit using the resource allocated by the centralised node 205, while other UEs 209 monitor a control channel to see whether there is data to be received from the originating UE 201. The resource allocation can be dynamic (packet by packet) or semi-persistent (such that, for example, once allocated the resource allocation is followed until the resources are released).

Once the originating UE 201 has completed its transmission, it releases the floor by sending a release message 229 to the node 205, and the resources are released back to the node 205. In an example, the listening UEs 209 can stop monitoring the control channel either after a certain idle period or in the SPS case, the centralised node stops the SPS schedule.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for managing the floor in a device-to-device proximity service comprising:
receiving a floor request message at a centralised node of the system sent by originating user equipment (UE);
transmitting a floor response message to the originating UE from the centralised node in response to the floor request message;
transmitting a wake message from the centralised node to at least one listening UE; and
using the centralised node to allocate resources for a proximity session between the originating UE and the or each listening UE.

2. A method as claimed in claim 1, wherein the service is a Push-To-Talk (PTT) over Cellular (PoC) service.

3. A method as claimed in claim 1 or 2, wherein the floor request message is received at an application layer or non-access stratum portion of the centralised node, the method further comprising forwarding the floor request message from the application layer or non-access stratum portion to a radio access portion of the centralised node.

4. A method as claimed in claim 3, wherein the wake message is transmitted from the radio access portion of the centralised node.

5. A method as claimed in claim 2, further including allocating different resources for a PoC session on the basis of the capabilities of the or each listening device.

6. A method as claimed in any preceding claim, wherein the resources are allocated dynamically, or on a semi-persistent basis such that the resources are followed until release.

7. A method as claimed in any preceding claim, wherein the floor response and wake messages are provided in a single message.

8. A method as claimed in claim 1 or 2, wherein the floor request message is received at a radio side or access stratum portion of the centralised node.

9. A method as claimed in any preceding claim, further including receiving a floor release message at the centralised node and releasing the allocated resources thereby releasing the floor to the centralised node.

10. A method as claimed in claim 9, wherein the floor release message is provided to the radio access portion of the node.

11. A node for managing the floor of a device-to-device push-to-talk service in a radio communications system, operable to:
receive a floor request message from an originating user equipment (UE);
transmit a floor response message to the originating UE in response to the floor request message;
transmit a wake message to at least one listening UE; and
allocate resources for the service between the originating UE and the or each listening UE.

12. A node as claimed in claim 11, further operable to:
receive the floor request message from an originating user equipment (UE) at an application layer of the node; and
transmit the floor request message from the application layer to radio access portion of the node.

13. A node as claimed in claim 11, further operable to:
receive the floor request message from an originating user equipment (UE) at a radio access portion of the node.

14. User equipment (UE) operable to manage the floor of a device-to-device push-to-talk service in a radio communications system, the UE operable to:
receive a floor request message from an originating UE;
transmit a floor response message to the originating UE in response to the floor request message;
transmit a wake message to at least one listening UE of the system; and
allocate resources for the service between the originating UE and the or each listening UE.

15. User equipment as claimed in claim 14, operable to manage the floor of the service when not under the coverage of the system.

## Amended claims

### Amended claims in accordance with Rule 137(2) EPC.

1. A method for managing the floor in a device-to-device proximity service between originating user equipment (UE) (101; 201) and at least one listening UE (113; 209) of a group of UEs comprising:
receiving a floor request message (115; 203) at a centralised node (107; 205) of the system sent by the originating UE (101; 201);
transmitting a floor response message (121; 221) to the originating UE (101; 201) from the centralised node (107; 205) in response to the floor request message (115; 203);
transmitting a wake message (125; 223) from the centralised node (107; 205) to the at least one listening UE (113; 209), the wake message including a group identity of the group of UEs; and
using the centralised node (107; 205) to allocate control channel resources for a proximity session between the originating UE (101; 201) and the or each listening UE (113; 209) for direct communication between the originating UE (101; 201) and the or each listening UE (113; 209).

2. A method as claimed in claim 1, wherein the service is a Push-To-Talk (PTT) over Cellular (PoC) service.

3. A method as claimed in claim 1 or 2, wherein the floor request message (115) is received at an application layer or non-access stratum portion (111) of the centralised node (107), the method further comprising forwarding the floor request message from the application layer or non-access stratum portion (111) to a radio access portion (109) of the centralised node (107).

4. A method as claimed in claim 3, wherein the wake message (125; 223) is transmitted from the radio access portion (109; 207) of the centralised node (107; 205).

5. A method as claimed in claim 2, further including allocating different resources for a PoC session on the basis of the capabilities of the or each listening device (113; 209).

6. A method as claimed in any preceding claim, wherein the resources are allocated dynamically, or on a semi-persistent basis such that the resources are followed until release.

7. A method as claimed in any preceding claim, wherein the floor response and wake messages are provided in a single message.

8. A method as claimed in claim 1 or 2, wherein the floor request message (203) is received at a radio side or access stratum portion (207) of the centralised node (205).

9. A method as claimed in any preceding claim, further including receiving a floor release message (129); 229) at the centralised node (107; 205) and releasing the allocated resources thereby releasing the floor to the centralised node (205; 107.

10. A method as claimed in claim 9, wherein the floor release message (229) is provided to the radio access portion (207) of the node (205).

11. A node (107; 205) for managing the floor of a device-to-device push-to-talk service between originating user equipment (UE) (101; 201) and at least one listening UE (113; 209) of a group of UEs in a radio communications system, the node (107; 205) operable to:
receive a floor request message (115; 203) from the originating UE (101; 201);
transmit a floor response message (121; 221) to the originating UE (101; 201) in response to the floor request message (115; 203);
transmit a wake message (125; 223) including a group identity of the group of UEs to the at least one listening UE (113; 209); and
allocate control channel resources (127; 227) for the service between the originating UE (101; 201) and the or each listening UE (113; 209) for direct communication between the originating UE (101; 201) and the or each listening UE (113; 209).

12. A node (107; 205) as claimed in claim 11, further operable to:
receive the floor request message (115) from an originating user equipment (UE) (101) at an application layer (111) of the node (107); and
transmit the floor request message (123) from the application layer (111) to radio access portion (109) of the node (107).

13. A node (107; 205) as claimed in claim 11, further operable to:
receive the floor request message (203) from an originating user equipment (UE) (201) at a radio access portion (207) of the node (205).

14. User equipment (UE) operable to manage the floor of a device-to-device push-to-talk service between an originating UE (101; 201) and at least one listening UE (113; 209) of a group of UEs in a radio communications system, the UE operable to:
receive a floor request message (115; 203) from an originating UE (101; 201);
transmit a floor response message (121; 221) to the originating UE (101; 201) in response to the floor request message;
transmit a wake message (125; 223) including a group identity of the group of UEs to the at least one listening UE (113; 209) of the system; and
allocate control channel resources (127; 227) for the service between the originating UE (101; 201) and the or each listening UE (113; 209) for direct communication between the originating UE (101; 201) and the or each listening UE (113; 209).

15. User equipment as claimed in claim 14, operable to manage the floor of the service when not under the coverage of the system.
